# EUROPÄISCHE PATENTSCHRIFT

(11) **EP 1 085 952 B1**
(45) Veröffentlichungstag und Bekanntmachung des Hinweises auf die Patenterteilung: **09.10.2002**
(21) Anmeldenummer: 99927868.2
(22) Anmeldetag: 04.06.1999
(51) Int. Cl.: B21J 15/04, F16B 19/08

(54) **VORRICHTUNG ZUR HERSTELLUNG EINER NIETVERBINDUNG UND ZUGEHÖRIGER NIET**
DEVICE FOR PRODUCING A RIVETED JOINT AND CORRESPONDING RIVET
DISPOSITIF POUR REALISER UN ASSEMBLAGE RIVE, ET RIVET CORRESPONDANT

(30) Priorität: 12.06.1998 DE 19826157
(43) Veröffentlichungstag der Anmeldung: 28.03.2001
(73) Patentinhaber: Wirth GmbH, 06188 Landsberg (DE)
(72) Erfinder: RÖTHE, Sven, D-06886 Lutherstadt Wittenberg (DE); WIRTH, Klaus, D-88069 Tettnang (DE)
(74) Vertreter: Crazzolara, Helmut, Dr.
(86) Internationale Anmeldenummer: EP9903862
(87) Internationale Veröffentlichungsnummer: WO99065629

(56) Entgegenhaltungen:
- WO-A-95/05255
- DE-A- 2 334 385
- DE-A- 19 652 031
- DE-U- 29 514 392
- GB-A- 1 128 442
- US-A- 3 691 924

## Beschreibung

Die Erfindung betrifft eine Vorrichtung zur Herstellung einer Nietverbindung mit Mitteln zum Schießen und Ziehen des Niets gemäß dem Oberbegriff des Anspruchs 1 sowie einen zu dieser Vorrichtung zugehörigen Niet.

Bekanntermaßen werden derartige Nietverbindungen zur Verbindung von Werkstücken eingesetzt, insbesondere von Blechen, vor allem dann, wenn die zu verbindenden Werkstücke nur von einer Seite zugänglich sind. Typische Anwendungsgebiete sind die Montage von Beschlägen, Kassettenwänden oder Kantteilen auf Dämmpaneelen im Industrie- und Hallenbau. Die zu verbindenden Bleche weisen eine Dicke von 0,1 mm bis etwa 3 mm, typisch etwa 0,75 mm auf.

Zur Anbringung des eine Niethülse und einen durch die Niethülse geführten Nietdorn aufweisenden Niets werden die Werkstücke durchbohrt und der Niet mit der Niethülse voran bis zum Anschlag eines Anschlagkopfes der Niethülse am Bohrungsrand in die Bohrung hineingedrückt. Zur Herstellung der Nietverbindung zwischen den Werkstücken wird anschließend unter Gegenhaltung des Anschlagkopfes der Nietdorn in zur Eindrückrichtung entgegengesetzten Richtung gezogen, wobei sich das dem Anschlagkopf gegenüberliegende Ende der Niethülse unter Bildung einer Aufweitung verformt, so daß die miteinander zu verbindenden Werkstücke zwischen dem Anschlagkopf und der erzeugten Aufweitung zusammengehalten werden. Diese Art des Niets wird häufig auch als "Blindniet" bezeichnet. Die EP 0 302 128 B1 zeigt ein Werkzeug zum Ziehen oder Setzen von Blindnieten. Auch bei Verwendung eines derartigen Werkzeuges ist ein Vorbohren und Einstecken des Blindniets erforderlich.

Die WO 95/05255 zeigt eine Vorrichtung zur Herstellung einer Nietverbindung mit pneumatisch angetriebenen Mitteln zum Schießen eines Niets durch zu verbindende Werkstücke und pneumatisch angetriebenen Mitteln zum anschließenden Ziehen des Niets. Die Mittel zum Schießen des Niets wirken dabei unter Einsatz eines kegelförmig sich verjüngenden, hohlzylindrischen Eintreibteils auf den Anschlagkopf der Niethülse ein. Der Nietdorn wird durch eine Öffnung in der dem Anschlagkopf des Niets zugewandten Anschlagfläche des Eintreibteils in das Innere des Eintreibteils geführt und dort von den in Schußrichtung hinter dem Eintreibteil angeordneten Mitteln zum Ziehen des Niets erfaßt. Bedingt durch die Anordnung der Mittel zum Ziehen des Niets innerhalb des von den Mitteln zum Schießen des Niets gebildeten hohlzylindrischen Volumens ist der konstruktive Aufwand für eine derartige Vorrichtung hoch, insbesondere erfordert der zuverlässige Betrieb einer derartigen Vorrichtung den Einsatz von hochwertigen Werkstoffen und die Einhaltung geringer Fertigungstoleranzen hinsichtlich der Mittel zum Ziehen des Niets. Außerdem bedingt diese Anordnung eine große Baugröße der Vorrichtung.

Die GB-A-1,128,442 zeigt eine Vorrichtung zur Herstellung einer Nietverbindung mit Mitteln zum Eintreiben eines eine Niethülse und einen durch die Niethülse geführten Nietdorn aufweisenden Niets durch zu verbindende Werkstücke und mit Mitteln zum Ziehen des Niets, wobei die Mittel zum Eintreiben des Niets auf den Nietdorn einwirken und in einem zylindrischen Teil einen Schießbolzen und ein zwischen dem Niet und dem Schießbolzen angeordnetes zylindrisches Schlagstück aufweisen, das eine Schulter aufweist, auf die der Schießbolzen aufschlägt. Wenn der Niet mit seinem Nietdorn beim Einstecken in die Vorrichtung nicht weit genug bis zur Anlage an einem Anlagestreifen des Schlagstücks eingeführt wird und/oder durch das Handhaben der Vorrichtung und die damit veibundenen Bewegungen der Nietdorn von dem Anlagestreifen weg bewegt wird, kommt es während des Eintreibvorgangs zu einem Aufschlagen des Schlagstücks auf den Nietdorn. Dies führt häufig zu einer unerwünschten Verformung des Nietdorns und/oder zu einer Beschädigung des Schlagstücks.

Die DE 295 14 392 U1 zeigt einen Niet, bei dem die Niethülse auf dem Nietdorn arretiert ist, insbesondere die Niethülse zwischen von dem Nietdorn ausgebildeten Ausbuchtungen und dem Nietkopf arretiert ist, und der Nietdorn an seinem den Werkstücken zugewandten ersten Ende eine kegelförmige Spitze aufweist. Beim Eintreiben eines derartigen Niets wird die Eintreibkraft auf die Niethülse ausgeübt. Bei der Verwendung eines derartigen Niets mit einer erfindungsgemäßen Vorrichtung, bei der die Mittel zum Eintreiben des Niets auf den Nietdorn einwirken, wird der Nietdorn durch die Niethülse hindurchgeschlagen, wodurch keine Nietverbindung herstellbar ist.

Der vorliegenden Erfindung liegt daher das Problem zugrunde, eine Vorrichtung zur Herstellung einer Nietverbindung bereitzustellen, welche die Nachteile des Standes der Technik überwindet und insbesondere eine Verformung des Nietdorns und/oder des Schlagstücks verhindert und dadurch eine höhere Funktionssicherheit und eine längere Lebensdauer der Vorrichtung bewirkt. Darüber hinaus soll die Vorrichtung kostengünstig herstellbar ist und einen zuverlässigen Betrieb gewährleistet. Der konstruktive Aufwand für die Bereitstellung von Mitteln zum Ziehen und Mitteln zum Schießen des Niets soll dabei möglichst gering sein, insbesondere soll eine Realisierung mit geringer Baugröße möglich sein. Außerdem soll ein mit dieser Vorrichtung verarbeitbarer Niet bereitgestellt werden.

Das Problem wird durch die im Anspruch 1 bestimmte Vorrichtung gelöst. Ein geeigneter Niet ist im nebengeordneten Anspruch bestimmt. Besondere Ausführungsarten der Erfindung sind in den Unteransprüchen bestimmt.

Das Problem ist dadurch gelöst, daß das Schlagstück in dem zylindrischen Teil durch ein elastisches Element, insbesondere durch eine erste Schraubenfeder in axialer Anlage an dem Nietdorn gehalten ist. Das hat den Vorteil, daß das Schlagstück bereits an dem Nietdorn anliegt, wenn der Schießbolzen auf das Schlagstück aufschlägt. Dadurch wird eine Beschädigung, insbesondere Verbiegung, des Nietdorns und des Schlagstücks aufgrund eines Aufschlagens des Schlagstücks auf dem Nietdorn zuverlässig verhindert. Weiterhin wird dadurch auch ein Hineinfallen des abgerissenen Nietdorns in den Schußkanal verhindert, und die Vorrichtung kann in jeder Lage betrieben werden, insbesondere können Nieten auch vertikal nach oben gesetzt werden.

Dadurch, daß die Mittel zum Eintreiben bzw. Schießen des Niets auf den Nietdorn einwirken, können die Mittel zum Ziehen des Niets vorteilhaft in Schußrichtung vor den Mitteln zum Schießen des Niets an dem Nietdorn angreifen. Der konstruktive Gestaltungsspielraum zur Realisierung der Mittel zum Ziehen des Niets wird dadurch größer und eine entsprechende Vorrichtung läßt sich klein und leicht realisieren. Das Schießen des Niets unter Einwirkung auf den Nietdorn erhöht zudem die Zuverlässigkeit der hergestellten Nietverbindung, da ein sicheres Durchstoßen der zu verbindenden Werkstücke mittels des Nietdorns gewährleistet ist. Die Mittel zum Schießen und Mittel zum Ziehen des Niets können pneumatisch, hydraulisch, magnetisch, elektrisch, piezoelektrisch oder unter Verwendung eines Explosionsmittels antreibbar sein.

Dadurch, daß die das "Zwischenschalten" eines zylindrischen Schlagstücks zwischen dem Schießbolzen und dem Niet die Zuverlässigkeit des Schießvorganges und damit der Nietverbindung erhöht ist, kann das Schlagstück dabei einen ersten Abschnitt ausweisen, dessen Durchmesser an den Durchmesser des Schußkanals angepaßt ist und einen zweiten Abschnitt aufweisen, dessen geringerer Durchmesser an den Durchmesser des Nietdorns angepaßt ist, insbesondere etwa den einfachen bis 1,5-fachen Durchmesser des Nietdorns aufweist.

Die Vorrichtung gemäß Anspruch 2 hat den Vorteil, daß durch die beispielsweise muldenförmige und an das dem Schlagstück zugewandten Ende des Nietdorns angepaßte Zentriereinrichtung die Zuverlässigkeit des Schießvorgangs weiter erhöht ist. Insbesondere ist auch die üblicherweise gewünschte rechtwinklige Ausrichtung des Nietdorns in bezug auf die zu verbindenden Werkstücke und eine entsprechende Führung des Niets während des Schießvorgangs gewährleistet.

Die Vorrichtung gemäß Anspruch 3 hat den Vorteil, daß die Bewegung des Schlagstücks am Ende des Schießvorganges durch das elastische Pufferelement sanft abgebremst wird und insbesondere nicht auf das Ende des vorzugsweise metallisch ausgebildeten Schußkanals auftrifft. Die Standzeit der Vorrichtung wird dadurch signifikant erhöht.
Das Pufferelement liegt vorzugsweise an einer ringförmigen Schulter am Ende des Schußkanals an, die durch eine Öffnung im Schußkanal gebildet ist, und kann beispielsweise als Schraubenfeder, Tellerfeder oder Gummioder Kunststoffscheibe ausgeführt sein.

Die Vorrichtung gemäß Anspruch 4 hat den Vorteil, daß durch die zweistückige Ausbildung des Schußkanals durch einen hohlen Kolben und ein Verbindungsstück, die vorzugsweise miteinander verschraubt sind, der Schußkanal einfach zugänglich ist und insbesondere das Schlagstück bei Bedarf ausgetauscht werden kann.

Die Vorrichtung gemäß Anspruch 5 hat den Vorteil, daß durch das Endstück nicht nur eine Führung des Nietdorns während des Schieß- und Ziehvorganges erfolgt, sondern daß das Endstück gleichzeitig eine Spreizung der Spannbacken während des Schießvorganges gewährleistet und damit ein reibungsfreier Durchtritt des Nietdorns und gegebenenfalls des Schlagstücks durch die Spannbacken während des Schießvorgangs gewährleistet ist. Gleichzeitig ist eine Beschädigung der Spannbacken durch den Nietdorn und gegebenenfalls das Schlagstück während des Schießvorgangs zuverlässig verhindert. Außerdem ist durch die Spreizung der Spannbacken das Einführen eines neuen Niets vereinfacht. Das zweite elastische Element kann als Schraubenfeder ausgestaltet sein. Alternativ hierzu kommt beispielsweise eine Tellerfeder oder eine Gummi- oder Kunststoffscheibe in Betracht.

Die Vorrichtung gemäß Anspruch 6 hat den Vorteil, daß durch die miteinander verbundenen, vorzugsweise miteinander verschraubten, Kolben, Verbindungsstück und Spannhülse ein Ziehen des Nietdorns mittels Druckbeaufschlagung des Kolbens gegen die Kraftwirkung eines elastischen Elements, vorzugsweise einer Schraubenfeder mit hoher Federkonstante, ein zuverlässiges Ziehen des Niets und damit eine zuverlässige Herstellung der. Nietverbindung gewährleistet ist. Die Druckbeaufschlagung erfolgt vorzugsweise unter Verwendung eines hydraulischen Drucks, um die erforderlichen hohen Kräfte bereitzustellen.

Die Vorrichtung gemäß Anspruch 7 hat den Vorteil, daß die Vorrichtung nur einen Versorgungsanschluß, nämlich einen Druckluftanschluß benötigt. Die Bereitstellung des hydraulischen Drucks erfolgt über einen pneumatisch/hydraulischen Druckwandler. Das Schießen des Niets erfolgt pneumatisch, das Ziehen des Niets hydraulisch. Der gesamte Nietvorgang mit Schießen und Ziehen wird durch ein dreistufiges pneumatisches Schaltelement gesteuert. Der pneumatisch/hydraulische Druckwandler ist ebenso wie das Schnellentlüftungsventil vorzugsweise in einem Handgriff der Vorrichtung untergebracht.

Zur Verwendung in der erfindungsgemäßen Vorrichtung ist ein Niet gemäß Anspruch 8 vorgesehen. Durch die pyramidenförmige Spitze des Nietdorns sind beispielsweise vier Schneidkanten bereitgestellt, die das Durchdringen der Werkstücke vereinfachen. Durch das Vorsehen von derart auf die Spitze des Niets gerichteten Verhakungsmitteln, daß beim Einwirken von Mitteln zum Eintreiben des Niets auf den Nietdorn sich der Nietdorn in der Niethülse verhakt, ist eine Relativbewegung des Nietdorns gegenüber der Niethülse, insbesondere beim Schießvorgang des Niets, zuverlässig verhindert. Die Verhakungsmittel können dabei beispielsweise durch über den Umfang des Nietdorns verteilt angeordnete und radial abstehende Dornen oder durch in axialer Richtung hintereinander angeordnete, kegelstumpfförmige und durch Walzen hergestellte Teilabschnitte des Nietdorns realisiert sein.

Dadurch, daß die Niethülse fest mit dem Nietdorn verbunden ist, vorzugsweise verpreßt ist, ist sichergestellt, daß sich der Nietdorn insbesondere während des Schießvorgangs nicht oder zumindest nicht wesentlich relativ zu der Niethülse verschiebt. Dies ist insbesondere beim Einsatz des Niets in einer erfindungsgemäßen Vorrichtung vorteilhaft, da bei der erfindungsgemäßen Vorrichtung die Mittel zum Schießen des Niets auf den Nietdorn einwirken. Der Nietdorn besteht vorzugsweise aus Stahl oder Edelstahl. Die Niethülse kann ebenfalls aus Stahl bzw. Edelstahl oder alternativ dazu aus einer Aluminium- oder Kupferlegierung bestehen. Durch die Ausformung einer Spitze ist das Durchdringen der Werkstücke auch mit geringen Sthießenergien möglich. Die Spitze kann dabei kegelförmig ausgebildet sein oder beliebig ogival ausgebildet sein, insbesondere kann die Spitze auch eine oder mehrere Schneidkanten aufweisen.
Der Spitzenwinkel liegt vorzugsweise in einem Bereich von 30° bis 60°.

Der Niet gemäß Anspruch 9 hat den Vorteil, daß durch das sich ebenfalls verjüngende zweite Ende des Nietdorns ein sicheres Zusammenwirken mit der Zentriereinrichtung am Schlagstück gewährleistet ist. Eine Ausgestaltung des zweiten Endes in Form einer Pyramide ergibt sich vorteilhaft bereits durch entsprechendes Abtrennen eines Nietdorns von einem stangenförmigen Ausgangsmaterial.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im einzelnen beschrieben ist.
- Fig. 1: zeigt einen Schnitt durch den Kopfteil der erfindungsgemäßen Vorrichtung,
- Fig. 2: zeigt einen Schnitt durch den Handgriff der erfindungsgemäßen Vorrichtung,
- Fig. 3: zeigt eine schematisierte und teilweise geschnittene Gesamtansicht der erfindungsgemäßen Vorrichtung, und
- Fig. 4: zeigt einen Niet für die Verwendung in der erfindungsgemäßen Vorrichtung.

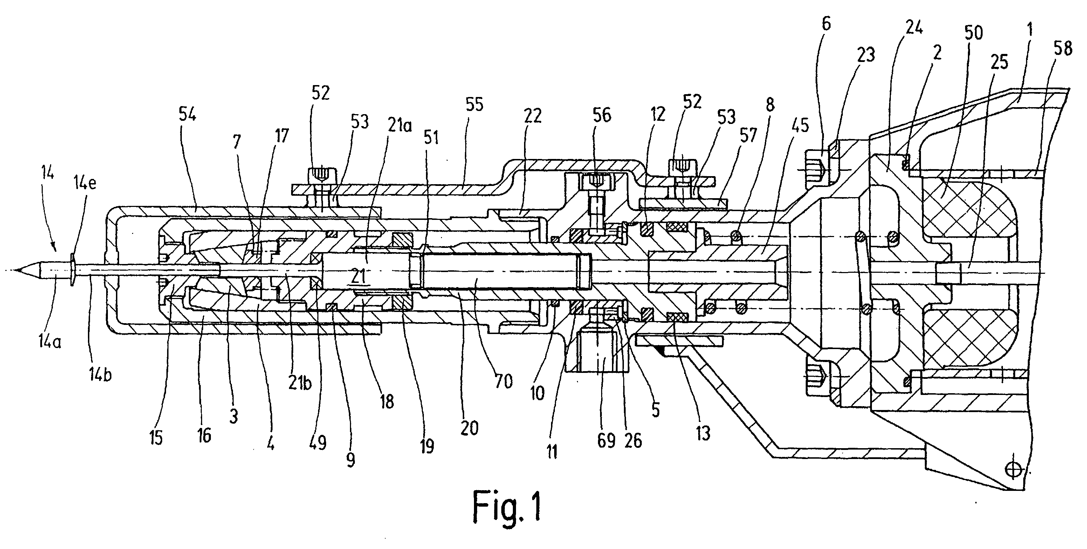

Die Fig. 1 zeigt einen Schnitt durch den Kopfteil der erfindungsgemäßen Vorrichtung, der für das Schießen und Ziehen des Niets verantwortlich ist. Am rechten Bildrand ist das Gehäuse 1 der Vorrichtung dargestellt, auf welches unter Verwendung eines dichtenden ersten O-Rings 2 und einer Stützscheibe 24 der erste Zylinder 22 mittels Zylinderschrauben 6 und Unterlegscheiben 23 aufgeschraubt ist. Ebenfalls am rechten Bildrand ist der pneumatische Zylinder 58 mit dem Schießbolzen 25 und dem ersten Puffer 50 dargestellt. Der Schußkanal 70 erstreckt sich in axialer Verlängerung des Schießbolzens 25 und wird durch das Zentrierstück 45, den hohlen Kolben 20 und das Verbindungsstück 18 gebildet. Der Kolben 20 ist dabei mit dem Verbindungsstück 18 verschraubt und mit dem Zentrierstück 45 durch eine enge Spielpassung und unter Kraftwirkung der als drittes elastisches Element ausgebildeten dritten Schraubenfeder 8 verbunden. Der Kolben 20 ist mittels der dritten Schraubenfeder 8, die sich an einem Ende an der Stützscheibe 24 abstützt und am anderen Ende am Zentrierstück 45 abstützt, in Richtung der am linken Bildrand dargestellten Niet 14 vorgespannt.

Der Kolben 20 ist in dem ersten Zylinder 22 durch einen Führungsring 13 und eine erste Dichtungskombination 12 geführt und abgedichtet. Am Hydraulikanschluß 69 wird Hydrauliköl über eine Ringnut und entsprechende Bohrungen in der ersten Führungsbuchse 26 an einem Sicherungsring 5 vorbei in das hohlzylindrische Volumen zwischen erstem Zylinder 22 und Kolben 20 zugeführt und der Kolben 20 ist bei entsprechender Druckbeaufschlagung von beispielsweise 200 Bar gegen die Wirkung der dritten Schraubenfeder 8 in dem ersten Zylinder 22 verschiebbar. Ein weiterer Hydraulikanschluß des ersten Zylinders 22 ist durch die erste Schraube 56 blind gestopft. Der Kolben 20 ist durch eine zweite Dichtungskombination 11 und einen axial daneben angeordneten dritten O-Ring 10 am nietseitigen Ende des ersten Zylinders 22 nochmals geführt und abgedichtet. Die Dichtungskombinationen 11, 12, 35 sind mehrteilig und weisen ein Kunststoffteil mit einer Dichtlippe und einen darunterliegenden O-Ring auf.

Der Kolben 20 ist mit dem Verbindungsstück 18 unter Verwendung einer Kontermutter 19 verschraubt. In dem durch fluchtende Bohrungen in dem Kolben 20 und dem Verbindungsstück 18 gebildeten Schußkanal 70 ist ein Schlagstück 21 geführt, welches durch die als erstes elastisches Element ausgeführte erste Schraubenfeder 51 in Richtung des Niets 14 vorgespannt ist. Die erste Schraubenfeder 51 stützt sich dabei in Richtung des Gehäuses 1 an einer in dem Schußkanal durch den Kolben 20 gebildeten ringförmigen Schulter ab und stützt sich in Richtung des Niets 14 an dem Schlagstück 21 ab. Das Schlagstück 21 weist an seinem der ersten Schraubenfeder 51 zugewandten Ende durch Ausbildung eines zylindrischen Fortsatzes mit geringerem Durchmesser ebenfalls eine ringförmige Schulter auf, auf der sich die erste Schraubenfeder 51 abstützt.

Das Schlagstück 21 kann ein- oder mehrstückig ausgebildet sein, insbesondere zweistückig ausgebildet sein. Im Falle einer zweistückigen Ausbildung kann das Schlagstück 21 aus einer Hülse und einem in der Hülse eingesetzten und mit ihr fest verbundenen Dorn bestehen, der gegenüber der Hülse einen kleineren Durchmesser, eine größere Länge und einen höheren Elastizitätsmodul und/oder eine größere Härte aufweist. Die feste Verbindung zwischen Hülse und Dorn kann beispielsweise über Verschweißen, Verpressen oder Verkleben erfolgen. Der Durchmesser der Hülse ist an den Durchmesser des Schußkanals 70 angepaßt, während der Durchmesser des Dorns an den Durchmesser des Nietdorns 14b angepaßt ist.

In der dargestellten Position liegt das Schlagstück 21 an einem am Ende des Schußkanals 70 angeordneten Pufferelement 49 an. Der Schußkanal 70 ist durch eine Bohrung im Verbindungsstück 18 zum Niet 14 hin offen, wobei im dargestellten Ausführungsbeispiel das Schlagstück 21 einen ersten Abschnitt 21a aufweist, dessen Durchmesser an den Durchmesser des Schußkanals 70 angepaßt ist und mittels dessen das Schlagstück 21 im Schußkanal 70 geführt ist, und weist einen zweiten Abschnitt 21 b auf, dessen geringerer Durchmesser an den Durchmesser der Bohrung im Verbindungsstück 18 bzw. an den Durchmesser des Nietdorns 14b angepaßt ist.

Das Verbindungsstück 18 ist innerhalb einer mit dem ersten Zylinder 22 verschraubten Führungshülse 16 durch einen in eine Ringnut eingelegten zweiten O-Ring 9 abgedichtet und geführt. Mit dem Verbindungsstück 18 ist weiterhin eine Spannhülse 4 verschraubt, die um den Nietdorn 14b herum angeordnete Spannbacken 3 umfaßt und ebenfalls in der Führungshülse 16 geführt ist. Die Spannbacken 3 werden an ihrem dem Gehäuse 1 zugewandten Ende mittels einer Druckhülse 17, die unter Wirkung einer zwischen der Druckhülse 17 und dem Verbindungsstück 18 angeordneten zweiten Schraubenfeder 7 in Richtung des Niets 14 vorgespannt ist, und an ihrem dem Niet 14 zugewandten Ende mittels einen in die Führungshülse 16 eingeschraubten Endstück 15 gespreizt. Die Spreizung erfolgt dabei durch formschlüssige Anlage von kegelmantelförmigen Stirnflächen der Spannbacken 3 und der Druckhülse 17 bzw. des Endstücks 15.

Der zweite Abschnitt 21 b des Schlagstücks 21 ragt in der dargestellten Position durch die Bohrung des Verbindungsstück 18 und eine Bohrung in der Druckhülse 17 bis zwischen die Spannbacken 3 und liegt an dem Nietdorn 14b des Niets 14 an. Der zweite Abschnitt 21b weist an seinem dem Nietdorn 14b zugewandten Ende eine muldenförmige Vertiefung als Zentriereinrichtung für den Nietdorn 14b auf.

Die Führungshülse 16 ist von einer Zentrierhülse 54 umgeben, die eine mit der Bohrung im Endstück 15 fluchtende Öffnung für die Aufnahme des Nietdorns 14b aufweist. Die Zentrierhülse 54 ist über erste Schrauben 52 und mit der Zentrierhülse 54 bzw. dem zweiten Gestänge 57 fest verbundenen, vorzugsweise verschweißten, Muttern 53 mit einem ersten Gestänge 55 und einem zweiten Gestänge 57 verbunden, welches auf ein Schaltelement der Vorrichtung derart wirkt, daß der Schießvorgang erst ausgelöst werden kann, wenn die Zentrierhülse 54 durch eine entsprechende Anlagekraft auf die Vorrichtung unter Anlage des Niets 14 an die zu verbindenden Werkstücke sowie an die Zentrierhülse 54 axial in Richtung des Gehäuses 1 über die Führungshülse 16 geschoben ist und an dieser anliegt. Dadurch wird sowohl das Verletzungsrisiko durch Schießen eines Niets ohne entsprechende Anlage an ein Werkstück als auch ein Leerschießen und das damit verbundene Beschädigungsrisiko der Vorrichtung wirksam minimiert.

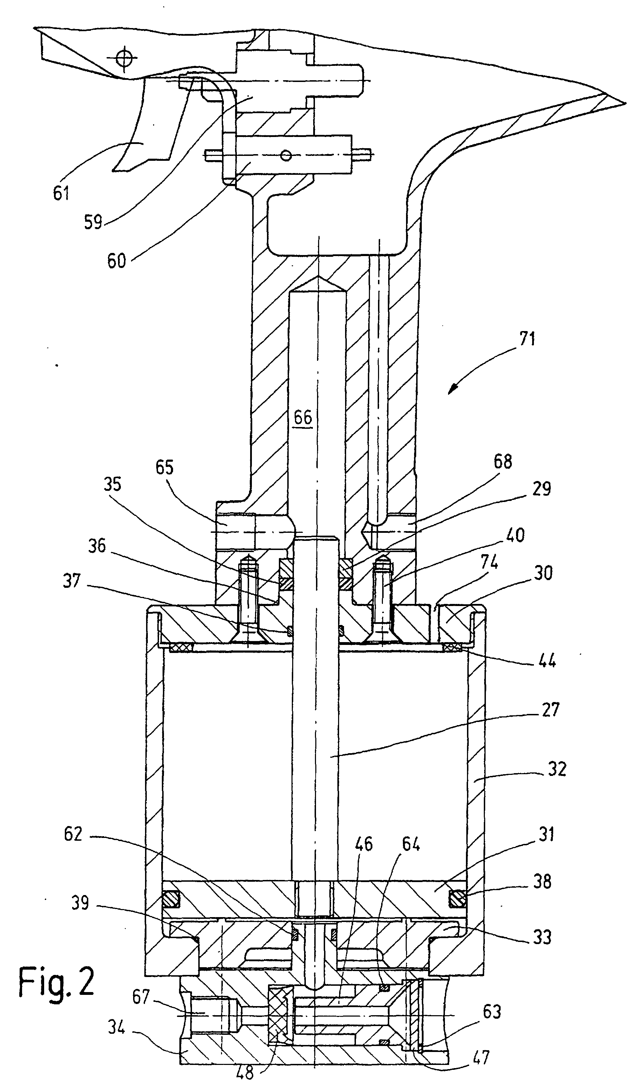

Die Fig. 2 zeigt einen Schnitt durch den Handgriff 71 der erfindungsgemäßen Vorrichtung. Über den Druckluftanschluß 68 wird die Vorrichtung mit Druckluft von beispielsweise 7 Bar versorgt. Über ein das Schießen-Ventil 59, das Ziehen-Ventil 60 und den Abzug 61 umfassendes pneumatisches Schaltelement wird der Vorgang des Schießens und des Ziehens gesteuert. Der während des Ziehens des Niets aktive pneumatisch/hydraulische Druckwandler wird über eine nicht dargestellte Verbindung zwischen dem Ziehen-Ventil 60 und dem Eingangsanschluß 67 in der Abdeckung 34 mit Druckluft beaufschlagt. Die nicht dargestellte Verbindung kann beispielsweise über außerhalb des Handgriffs geführte Druckluftschläuche oder über innerhalb des Handgriffs geführte Druckluftschläuche oder Druckluftkanäle realisiert sein.

Die Abdeckung 34 umfaßt weiterhin ein Schnellentlüftüngsventil, welches eine verschiebbare Dichtung 48 und einen mittels eines neunten O-Rings 64 abgedichteten und eine axiale Bohrung aufweisenden Einsatz 46 umfaßt. Auf der Ausgangsseite des Schnellentlüftungsventils ist ein mit einem zweiten Sicherungsring 63 gesichertes Sieb 47 vorgesehen, um eine Verunreinigung des Schnellentlüftungsventils zu verhindern. Ein Anschluß des Schnellentlüftungsventils ist über eine Bohrung in der Abdeckung 34 mit dem zweiten Zylinder 32 des pneumatisch/hydraulischen Druckwandlers verbunden. Die Abdeckung 34 ist unter Verwendung eines mit ihr verschraubten Dichtflansches 33 und siebten und achten O-Ringen 39 und 62 mit dem zweiten Zylinder 32 verbunden.

Innerhalb des zweiten Zylinders 32 ist ein Pneumatikkolben 31 angeordnet, der mittels eines in einer Ringnut eingelegten sechsten O-Ringes 38 gegenüber der Wand des zweiten Zylinders 32 abgedichtet ist. Mit dem Pneumatikkolben 31 ist eine Kolbenstange 27 verbunden, die unter Verwendung einer dritten Dichtungskombination 35 und eines fünften O-Ringes 37 durch einen Flansch 30 hindurchtritt und in einen mit einer hydraulischen Flüssigkeit gefüllten Hohlraum 66 eintritt. Die Kolbenstange 27 ist außerdem durch eine zwischen dem Führungsflansch 30 und dem Handgriff 71 angeordnete Führungsbuchse 29 geführt. Bei einer Aufwärtsbewegung des Pneumatikkolbens 31 und damit der Kolbenstange 27 wird der pneumatische Druck am Eingangsanschluß 67 in einen hydraulischen Druck im Hohlraum 66 umgewandelt. Der hydraulische Druck wird über den Ausgangsanschluß 65 an den in der Fig. 1 dargestellten Hydraulikanschluß 69 geführt. Die nicht dargestellte Druckführung auf der Hydraulikseite kann wiederum beispielsweise durch außerhalb des Handgriffs bzw. der Vorrichtung geführte Druckleitungen oder durch innerhalb der Vorrichtung geführte Druckleitungen oder Druckkanäle realisiert sein.

Der Führungsflansch 30 ist mittels zweiter Schrauben 40 mit dem Handgriff 71 unter Verwendung eines vierten O-Ringes 36 dicht verschraubt. Gleichzeitig ist der Flansch 30 durch ein Außengewinde mit dem zweiten Zylinder 32 verschraubt. Der Flansch 30 weist eine Be- und Entlüftungsöffnung 74 auf. Auf dem Flansch 30 ist weiterhin ein ringförmiger zweiter Puffer 44 zum Abpuffern des Pneumatikkolbens 31 bei einer Aufwärtsbewegung vorgesehen.

Bei der Herstellung einer Nietverbindung kommt es zu folgendem Funktionsablauf: Zunächst wird wie in der Fig. 1 dargestellt ein Niet in die Vorrichtung so weit eingeführt, bis der Nietdorn 14b an dem Schlagstück 21 anliegt. In diesem Zustand ist der Schießvorgang noch nicht auslösbar, da die Zentrierhülse 54 in der in Fig. 1 dargestellten Position das pneumatische Schaltelement 59, 60, 61 noch nicht entsichert. Anschließend wird die Vorrichtung mit dem Nietdorn 14b gegen die zu verbindenden Werkstücke gedrückt. Dabei wird der Nietdorn 14b zunächst gegen die Wirkung der ersten Schraubenfeder 51 durch die Spannbacken 3 in die Öffnung des Verbindungsstücks 18 eingeführt und damit das Schlagstück 21 im Schußkanal 70 nach hinten gedrückt. Der Anschlagkopf 14e der Niethülse 14a kommt dabei in Anlage mit der Zentrierhülse 54 und schiebt diese beim weiteren Andrücken in Richtung der Führungshülse 16, wodurch über das erste und zweite Gestänge 55, 57 das pneumatische Schaltelemenent 59, 60, 61 entsichert wird.

Beim Betätigen der ersten Schaltstufe wird der Schießbolzen 25 nach vorne geschleudert und trifft auf das Schlagstück 21, welches auf den Nietdorn 14b einwirkt und den Niet 14 in die zu verbindenden Werkstücke einschießt. Die Vorwärtsbewegung des Schlagstücks 21 wird dabei durch das Pufferelement 49 innerhalb des Schußkanals 70 abgepuffert.

Beim weiteren Durchziehen des in der Fig. 2 dargestellten Abzugs 61 wird über das Ziehen-Ventil 60 der pneumatisch/hydraulische Druckwandler über den Eingangsanschluß 67 mit Druckluft beaufschlagt. Die Dichtung 48 legt sich dabei an den Einsatz 46 an und gibt den Weg der Druckluft auf den Pneumatikkolben 31 frei, der sich nach oben bewegt und über die Kolbenstange 27 im Hohlraum 66 einen Druck aufbaut, der über den Ausgangsanschluß 65 auf den in der Fig. 1 dargestellten Hydraulikanschluß 69 geführt wird.

Der Hydraulikdruck wirkt auf den Kolben 20 und drückt ihn gegen die Kraft der dritten Schraubenfeder 8 in Richtung des Gehäuses 1. Dadurch wird auch die Spannhülse 4 in Richtung des Gehäuses 1 gezogen und die Spannbacken 3 umgreifen fest den Nietdorn 14b und reißen ihn nach hinten an einer Sollbruchstelle ab. Beim Freigeben des Abzugs 61 wird der in Fig. 2 dargestellte Eingangsanschluß 67 drucklos, wodurch die Dichtung 48 vom Einsatz 46 abfällt und den Weg der Druckluft aus dem zweiten Zylinder 32 durch den Einsatz 46 und das Sieb 47 an die Umgebung freigibt. Der zweite Zylinder 32 wird dadurch drucklos. Unter Wirkung der dritten Schraubenfeder 8 wird der Kolben 20 in seine Ausgangsstellung in Richtung des Niets 14 gedrückt und durch die hydraulische Verbindung über den Hydraulikanschluß 69 und den Ausgangsanschluß 65 die Kolbenstange 27 und damit der Pneumatikkolben 31 zurück in seine untere Ausgangsposition bewegt. Gleichzeitig wird durch die Bewegung des Kolbens 20 in Richtung des Niets 14 mittels des zweiten Abschnitts 21b des Schlagstücks 21 der abgerissene Nietdorn 14b durch die Spannhülse 4 und die Führungshülse 16 nach vorne ausgeworfen. Die Vorrichtung ist nun bereit zum Einlegen eines neuen Niets und zum wiederholten Herstellen einer Nietverbindung.

Die Mechanik des pneumatischen Schaltelements 59, 60, 61 und des mit ihm in Wirkverbindung stehenden zweiten Gestänges 57 ist so konzipiert, daß der Schießbolzen 25 nach einem Schuß vorzugsweise in seine Ausgangsstellung zurückkehrt und ein mehrmaliges Auslösen des Ziehen-Vorganges ohne zwischenzeitlichen Schießen-Vorgang möglich ist, solange die Maschine nicht von den zu verbindenden Werkstücken abgehoben worden ist. Dies erlaubt vorteilhafterweise ein mehrfaches Ziehen eines eingeschossenen Niets und erhöht somit insgesamt die Zuverlässigkeit und Betriebssicherheit der Vorrichtung.

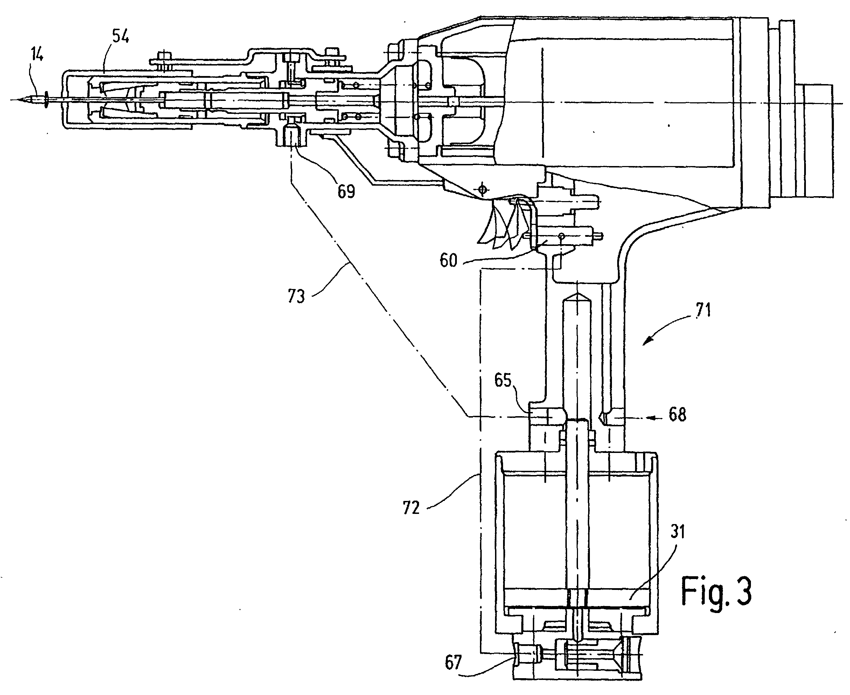

Die Fig. 3 zeigt eine schematisierte und teilweise geschnittene Gesamtansicht der erfindungsgemäßen Vorrichtung. Die dargestellte Position des Niets 14 in bezug auf die Zentrierhülse 54 und damit auf den Kopf der Vorrichtung entspricht der Darstellung in der Fig. 1. Die Position des Pneumatikkolbens 31 im Handgriff 71 entspricht der Darstellung in der Fig. 2. Die Druckluftleitung 72 ist durch eine strichpunktierte Linie zwischen dem Ziehen-Ventil 60 und dem Eingangsanschluß 67 dargestellt. Die hydraulische Druckleitung 73 ist durch eine strichpunktierte Linie zwischen dem Ausgangsanschluß 65 und dem Hydraulikanschluß 69 dargestellt.

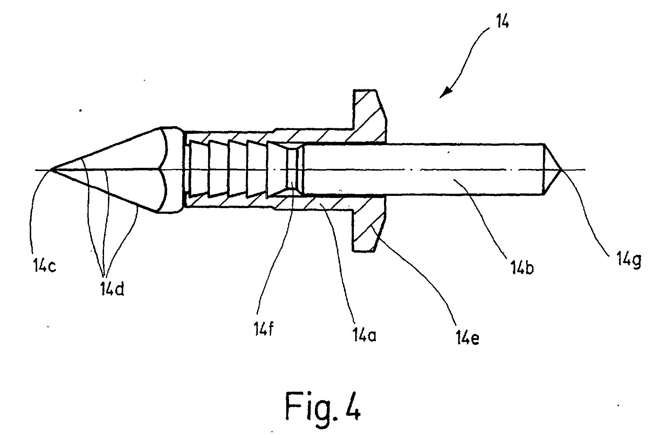

Die Fig. 4 zeigt einen Niet für die Verwendung in der erfindungsgemäßen Vorrichtung. Der Niet 14 ist zweiteilig aufgebaut und weist eine Niethülse 14a und einen Nietdorn 14b auf. Der Nietdorn 14b ist an seinem auf die zu verbindenden Werkstücke gerichteten ersten Ende mit einer Spitze 14c und mit Schneidkanten 14d versehen. Als besonders vorteilhaft hat sich ein pyramidenförmiges erstes Ende des Nietdorns 14b erwiesen, wodurch insgesamt vier Schneidkanten 14d gebildet sind. Der Nietdorn 14b wird abschnittsweise von der Niethülse 14a umgeben, wobei die Niethülse 14a an ihrem der Spitze 14c abgewandten Ende pilzkopfförmig ausgebildet ist und einen Anschlagkopf 14e bildet. An dem der Spitze 14c entgegengesetzten Ende 14g ist der Nietdorn 14b ebenfalls vorzugsweise pyramidenförmig ausgebildet, um eine zuverlässige Zentrierung in bezug auf das Schlagstück 21 zu gewährleisten.

Beim Schießen des Niets 14 wird der Nietdorn 14b zusammen mit der Niethülse 14a so lange in die zu verbindenden Werkstücke eingetrieben, bis der Anschlagkopf 14e an einem der zu verbindenden Werkstücke anliegt. Um ein Durchschießen des Nietdorns 14b zu verhindern, weist der Nietdorn 14b im Bereich der Niethülse 14a auf die Spitze 14c des Niets 14 gerichtete Verhakungsmittel auf. Diese können beispielsweise durch sägezahnförmig verlaufende, eingewalzte Ringnuten gebildet sein, wobei die Sägezahnform derart ausgerichtet ist, daß sich der Nietdorn 14b beim Schießen des Niets 14 in der Niethülse verhakt. Im Bereich dieser Verhakungsmittel ist die Niethülse 14a fest mit dem Nietdorn 14b verbunden, beispielsweise fest mit dem Nietdorn 14b verpreßt, verlötet, verklebt oder verschweißt. Darüber hinaus weist der Nietdorn 14b im Bereich der Niethülse 14a eine Sollbruchstelle 14f auf, an der der Nietdorn 14b beim Ziehen des Niets 14 abreißt.

## Patentansprüche

1. Vorrichtung zur Herstellung einer Nietverbindung mit Mitteln (21, 25) zum Eintreiben eines eine Niethülse (14a) und einen durch
die Niethülse (14a) geführten Nietdorn (14b) aufweisenden Niets (14) durch zu verbindende Werkstücke und mit Mitteln zum Ziehen des Niets (14), wobei die Mittel (21, 25) zum Eintreiben des Niets (14) auf den Nietdorn (14b) einwirken und in einem zylindrischem Teil, insbesondere einem Schußkanal (70), einen Schießbolzen (25) und ein zwischen dem Niet (14) und dem Schießbolzen (25) angeordnetes zylindrisches Schlagstück (21) aufweisen, auf welches
der Schießbolzen (25) aufschlägt, **dadurch gekennzeichnet, daß**
das Schlagstück (21) in dem zylindrischen Teil durch ein erstes elastisches Element, insbesondere durch eine erste Schraubenfeder (51), in axialer Anlage an dem Nietdorn gehalten ist.

2. Vorrichtung nach Anspruch 1, **dadurch gekennzeichnet, daß**
das Schlagstück (21) an seinem dem Niet (14) zugewandten Ende eine Zentriereinrichtung für den Nietdorn (14b) aufweist.

3. Vorrichtung nach Anspruch 1 oder 2, **dadurch gekennzeichnet, daß** an einem dem Niet (14) zugewandten Ende des zylindrischen Teils ein elastisches Pufferelement (49) angeordnet ist, welches die Bewegung des Schlagstücks (21) beim Eintreiben des Niets (14) abpuffert.

4. Vorrichtung nach einem der Ansprüche 1 bis 3, **dadurch gekennzeichnet, daß** das zylindrische Teil durch fluchtende Bohrungen in einem Kolben (20) und in einem mit dem Kolben (20) verbundenen Verbindungsstück (18) gebildet ist.

5. Vorrichtung nach Anspruch 4, **dadurch gekennzeichnet, daß** die Mittel zum Ziehen des Niets (14) eine mit dem Verbindungsstück (18) verbundene Spannhülse (4) aufweisen, die um den Nietdorn (14b) herum angeordnete Spannbacken (3) umfaßt, und daß die Spannhülse (4) und das Verbindungsstück (18) in einer Führungshülse (16) geführt sind, in deren dem Niet (14) zugewandten axialen Ende ein mit einer zentrischen Bohrung zur Aufnahme des Nietdorns (14b) versehenes Endstück (15) eingesetzt ist, welches die an ihn vor und während des Eintreibens unter Wirkung eines zweiten elastischen Elements (7) anliegenden Spannbacken (3) spreizt

6. Vorrichtung nach Anspruch 5, **dadurch gekennzeichnet, daß** der Kolben (20) beim Ziehen des Niets (14) in einem mit der Führungshülse (16) verbundenen Zylinder (22) entgegen der Eintreibrichtung durch Druckbeaufschlagung des Kolbens (20) gegen die Kraftwirkung eines dritten elastischen Elements (8) bewegbar ist.

7. Vorrichtung nach einem der Ansprüche 4 bis 6, **dadurch gekennzeichnet, daß** die Vorrichtung einen Druckluftanschluß (68) und ein mehrstufiges pneumatisches Schaltelement (59, 60, 61) aufweist, welches in einer ersten Schaltstufe den Schießbolzen (25) abschießt, in einer zweiten Schaltstufe die Druckluft einem vorzugsweise in einem Handgriff (71) der Vorrichtung untergebrachten pneumatisch/hydraulischen Druckwandler zuführt, der die Druckbeaufschlagung des Kolbens (20) beim Ziehen des Niets bereitstellt, und in einer dritten Schaltstufe den pneumatisch/ hydraulischen Druckwandler mittels eines Schnellentlüftungsventils entlüftet.

8. Niet für die Verwendung in einer Vorrichtung zur Herstellung einer Nietverbindung gemäß einem der Ansprüche 1 bis 7 mit Mitteln (21, 25) zum Eintreiben eines eine Niethülse (14a) und einen durch die Niethülse (14a) geführten Nietdorn (14b) aufweisenden Niets (14) durch zu verbindende Werkstücke und mit Mitteln zum Ziehen des Niets (14), wobei der Nietdorn (14b) fest mit der Niethülse (14a) verbunden ist, **dadurch gekennzeichnet, daß** der Nietdorn (14b) an seinem den Werkstücken zugewandten ersten Ende eine pyramidenförmige Spitze (14c) aufweist und daß der Nietdorn (14b) im Bereich der Niethülse (14a) Verhakungsmittel aufweist, die derart auf die Spitze (14c) des Niets (14) gerichtet sind, daß beim Einwirken von Mitteln zum Eintreiben des Niets (14) auf den Nietdorn (14b) sich der Nietdorn (14b) in der Niethülse verhakt.

9. Niet nach Anspruch 8, **dadurch gekennzeichnet, daß** der Nietdorn (14b) an seinem den Werkstücken abgewandten zweiten Ende (14g) sich verjüngt und vorzugsweise pyramidenförmig ausgebildet ist.

## Claims

1. Device for producing a riveted joint, having means (21, 25) for driving a rivet (14) through workpieces to be connected, which rivet (14) has a rivet sleeve (14a) and a rivet pin (14b) guided through the rivet sleeve (14a), and having means for setting the rivet (14), the means (21, 25) for driving in the rivet (14) acting on the rivet pin (14b) and having, in a cylindrical member, especially in a firing channel (70), a firing bolt (25) and a cylindrical striking piece (21) which is arranged between the rivet (14) and the firing bolt (25) and on which the firing bolt (25) strikes, **characterised in that** the striking piece (21) in the cylindrical member is held in axial abutment against the rivet pin by a first resilient element, especially by a first helical spring (51).

2. Device according to claim 1, **characterised in that** the striking piece (21) has, at its end facing the rivet (14), a centring device for the rivet pin (14b).

3. Device according to claim 1 or 2, **characterised in that** a resilient buffer element (49) which cushions the movement of the striking piece (21) when the rivet (14) is being driven in is arranged at an end of the cylindrical member that faces the rivet (14).

4. Device according to any one of claims 1 to 3, **characterised in that** the cylindrical member is formed by aligned drilled holes in a piston (20) and in a connecting piece (18) connected to the piston (20).

5. Device according to claim 4, **characterised in that** the means for setting the rivet (14) have a clamping sleeve (4) which is connected to the connecting piece (18) and which comprises clamping jaws (3) arranged around the rivet pin (14b), and **in that** the clamping sleeve (4) and the connecting piece (18) are guided in a guide sleeve (16) in whose axial end facing the rivet (14) is inserted an end piece (15) which is provided with a central drilled hole for receiving the rivet pin (14b) and which spreads the clamping jaws (3) which, before and during the driving-in operation, abut the rivet pin (14b) under the action of a second resilient element (7).

6. Device according to claim 5, **characterised in that**, during the setting of the rivet (14), the piston (20) is movable in a cylinder (22), which is connected to the guide sleeve (16), counter to the driving-in direction by pressurising the piston (20) against the action of force of a third resilient element (8).

7. Device according to any one of claims 4 to 6, **characterised in that** the device has a compressed-air connection (68) and a multi-stage pneumatic switching element (59, 60, 61) which, in a first switching stage, fires the firing bolt (25), in a second switching stage conveys the compressed air to a pneumatic/hydraulic pressure transducer which is preferably accommodated in a handle (71) of the device and which provides for the pressurisation of the piston (20) during the setting of the rivet, and in a third switching stage exhausts the pneumatic/hydraulic pressure transducer by means of a quick-action exhaust valve.

8. Rivet for use in a device for producing a riveted joint according to any one of claims 1 to 7, the device having means (21, 25) for driving a rivet (14) through workpieces to be connected, which rivet (14) has a rivet sleeve (14a) and a rivet pin (14b) guided through the rivet sleeve (14a), and having means for setting the rivet (14), the rivet pin (14b) being connected securely to the rivet sleeve (14a), **characterised in that** the rivet pin (14b) has a pyramidal tip (14c) at its first end facing the workpieces, and **in that** the rivet pin (14b) has, in the region of the rivet sleeve (14a), latching means which are directed towards the tip (14c) of the rivet (14) in such a manner that the rivet pin (14b) latches into the rivet sleeve during the action of means for driving the rivet (14) onto the rivet pin (14b).

9. Rivet according to claim 8, **characterised in that** the rivet pin (14b) tapers and is preferably in a pyramidal form at its second end (14g) remote from the workpieces.

## Revendications

1. Dispositif de réalisation d'un assemblage rivé comprenant des moyens (21, 25) destinés à enfoncer à travers des pièces à assembler un rivet (14), comportant une douille (14a) et une tige (14b) guidée à travers la douille (14a), et des moyens destinés à tirer le rivet (14), sachant que les moyens (21, 25) destinés à enfoncer le rivet (14) agissent sur la tige du rivet (14b) et sont munis, dans une partie cylindrique, en particulier un canal de projection (70), d'une cheville percutante (25) et d'un élément de percussion (21) cylindrique, qui est disposé entre le rivet (14) et la cheville percutante (25) et sur lequel vient percuter la cheville percutante (25), **caractérisé en ce que** l'élément de percussion (21) dans la partie cylindrique est maintenu en contact axial contre la tige du rivet par un premier élément élastique, en particulier par un premier ressort à boudin (51).

2. Dispositif selon la revendication 1, **caractérisé en ce que** l'élément de percussion (21), sur son extrémité orientée vers le rivet (14), comporte un dispositif de centrage pour la tige du rivet (14b).

3. Dispositif selon la revendication 1 ou 2, **caractérisé en ce que** sur l'extrémité de la partie cylindrique, orientée vers le rivet (14), est disposé un élément tampon élastique (49), qui amortit le mouvement de l'élément de percussion (21) pendant l'enfoncement du rivet (14).

4. Dispositif selon une des revendications 1 à 3, **caractérisé en ce que** la partie cylindrique est formée par des forures alignées dans un piston (20) et dans un élément d'assemblage (18) relié avec le piston (20).

5. Dispositif selon la revendication 4, **caractérisé en ce que** les moyens destinés à tirer le rivet (14) sont munis d'une douille de serrage (4) reliée à l'élément d'assemblage (18), qui comprend des mâchoires de serrage (3) disposées autour de la tige du rivet (14b), et **en ce que** la douille de serrage (4) et l'élément d'assemblage (18) sont guidés dans un manchon de guidage (16), dont l'extrémité axiale, orientée vers le rivet (14), reçoit une pièce d'extrémité (15), qui est munie d'une forure centrale destinée à recevoir la tige de rivet (14b) et qui, sous l'action d'un deuxième élément élastique (7), écarte les mâchoires de serrage (3) en appui contre elle, avant et pendant le processus d'enfoncement.

6. Dispositif selon la revendication 5, **caractérisé en ce que**, au moment du tirage du rivet (14), le piston (20) peut se déplacer dans un vérin (22), assemblé avec le manchon de guidage (16), dans le sens inverse de la direction d'enfoncement, sous l'effet d'une sollicitation de pression exercée sur le piston (20) à l'encontre de la force appliquée par un troisième élément élastique (8).

7. Dispositif selon une des revendications 4 à 6, **caractérisé en ce que** le dispositif comprend un raccord pour air comprimé (68) et un élément de commande (59, 60, 61) pneumatique à plusieurs niveaux, lequel dans un premier niveau de commande projette la cheville percutante (25), dans un deuxième niveau de commande achemine l'air comprimé vers un convertisseur de pression pneumatique/hydraulique, logé de préférence dans une poignée (71) du dispositif, lequel fournit la sollicitation de pression du piston (20) pendant le tirage du rivet, et dans un troisième niveau de commande chasse l'air hors du convertisseur de pression pneumatique/hydraulique au moyen d'une soupape de purge d'air rapide.

8. Rivet à utiliser dans un dispositif de réalisation d'un assemblage rivé, selon une des revendications 1 à 7, comprenant des moyens (21, 25) destinés à enfoncer à travers des pièces à assembler un rivet (14), comportant une douille (14a) et une tige (14b) guidée à travers la douille (14a), et des moyens destinés à tirer le rivet (14), sachant que la tige du rivet (14b) est assemblée de manière inamovible avec la douille du rivet (14a), **caractérisé en ce que** la tige du rivet (14b) est munie d'une pointe (14c) en forme de pyramide sur sa première extrémité orientée vers les pièces à assembler et **en ce que** la tige du rivet (14b) comporte dans la zone de la douille de rivet (14a) des moyens d'accrochage qui sont orientés vers la pointe (14c) du rivet (14) de telle sorte que lorsque les moyens destinés à enfoncer le rivet (14) agissent sur la tige du rivet (14b), la tige du rivet (14b) s'agrippe dans la douille du rivet.

9. Rivet selon la revendication 8, **caractérisé en ce que** la tige du rivet (14b) se rétrécit sur sa deuxième extrémité (14b), opposée aux pièces à assembler, et est conçue, de préférence, en forme de pyramide.
